# EUROPÄISCHE PATENTANMELDUNG

(11) **EP 3 144 654 A1**
(43) Veröffentlichungstag der Anmeldung: **22.03.2017**
(21) Anmeldenummer: 15185903.0
(22) Anmeldetag: 18.09.2015
(51) Int. Cl.: G01L 5/28

(54) **BREMSTESTVERFAHREN ZUR FUNKTIONSPRÜFUNG EINER HALTEBREMSE FÜR EINEN ELEKTROMOTOR IN EINEM ELEKTRISCHEN ANTRIEBSYSTEM**

(71) Anmelder: Siemens Aktiengesellschaft, 80333 München (DE)
(72) Erfinder: Krätz, Hans-Peter, 91056 Erlangen (DE)

(57) **Zusammenfassung**

Die Erfindung betrifft ein Bremstestverfahren (BV) zur Funktionsprüfung einer Haltebremse (1) für einen Elektromotor (2) in einem elektrischen Antriebsystem (3), wobei der Elektromotor (2) rotiert, bis zu einem ersten Zeitpunkt (t1) an der Haltebremse (1) ein Öffnungssignal (OS) ansteht und eine erste Drehzahl (n1) des Elektromotors (2) erfasst wird, während einer Zeitdauer (T) ab dem ersten Zeitpunkt (t1) bis zu einem zweiten Zeitpunkt (t2) an der Haltebremse (1) ein Schließsignal (CS) ansteht, welches die Haltebremse (1) zum Erzeugen eines Haltebremsmoments (HM) am Elektromotor (2) veranlasst, und eine zweite Drehzahl (n2) des Elektromotors (2) erfasst wird, ab dem zweiten Zeitpunkt (t2) an der Haltebremse (1) das Öffnungssignal (OS) ansteht, welches die Haltebremse (1) zur Zurücknahme des Haltebremsmoments (HM) am Elektromotor (2) veranlasst, und zwischen der ersten Drehzahl (n1) und der zweite Drehzahl (n2) ein erster Vergleich (V1) erfolgt, welcher eine erste Information (11) zur Einsatzbereitschaft (EB) der Haltebremse (1) bereitstellt. Die Erfindung betrifft weiterhin eine Steuer- und Regeleinheit (5) zur Durchführung des Bremstestverfahrens (BV), einen elektrischen Umrichter (4) mit der Steuer- und Regeleinheit (5) sowie ein elektrisches Antriebssystem (3) mit dem elektrischen Umrichter (4), einen Elektromotor (2) und einer Haltebremse (1).

## Beschreibung

Die Erfindung betrifft ein Bremstestverfahren zur Funktionsprüfung einer Haltebremse für einen Elektromotor in einem elektrischen Antriebsystem, weiterhin eine Steuer- und Regeleinheit zur Durchführung des Bremstestverfahrens, einen elektrischen Umrichter mit der Steuer- und Regeleinheit sowie ein elektrisches Antriebssystem mit dem elektrischen Umrichter, einem Elektromotor und einer Haltebremse.

Für Elektromotoren, wie sie in Werkzeugmaschinen oder in Industrieanlagen zum Einsatz kommen, gelten zu jedem Betriebszeitpunkt sowohl hohe funktionale wie auch sicherheitstechnische Anforderungen. So befindet sich der Elektromotor beispielsweise oft betriebsbedingt im Stillstand, wobei eine Rotation des Elektromotors durch unerwünschte Rotationsbewegungen der Last an der Welle des Elektromotors zu diesem spezifischen Betriebszeitpunkt verhindert werden muss.

Wird der Elektromotor gemeinsam mit einem elektrischen Umrichter in einem elektrischen Antriebssystems betrieben, kann mittels des elektrischen Umrichters an der Welle des Elektromotors ein Moment erzeugt werden, welches die unerwünschte Rotation des Elektromotors verhindert, also beispielsweise der Rotationsbewegungen der Last an der Welle des Elektromotors entgegenwirkt.

Kann oder soll am Elektromotor kein Moment erzeugt werden, muss eine ungewollte Rotationsbewegung aber auch dann verhindert werden. Dazu wird am Elektromotor meist noch eine Haltebremse angebracht, welche die Welle des Elektromotors sicher festhält. Ein typisches Einsatzgebiet für eine derartige Haltebremse ist ein Elektromotor mit einer hängenden Welle. Wird der Elektromotor hier momentfrei geschaltet, würde die hängende Welle bei Erreichen einer entsprechend geringen Drehzahl des Elektromotors nach unten fallen.

Technisch eher einfach gestaltete Haltebremsen haben einen im Wesentlichen mechanischen Aufbau. Sie können von ihrer Funktionalität her meist nur geöffnet oder geschlossen werden. Ist die Haltebremse geschlossen, wirkt am Elektromotor das gesamte, von der Haltebremse bereitstellbare Haltebremsmoment. Öffnet die Haltebremse, wird das Haltebremsmoment vom Elektromotor vollständig zurückgezogen.

Technisch komplexere Haltebremsen sind in der Lage, mittels variabler Ansteuerung ein gezieltes Haltebremsmoment am Elektromotor wirksam werden zu lassen. Zumindest sind Haltebremsen jedoch in aller Regel so steuerbar, dass ein Einschaltbefehl und ein Abschaltbefehl der Haltebremse mittels elektrischer Signale und die Umsetzung der Befehle mittels elektrotechnischer Komponenten erfolgt.

So werden zum Beispiel Elektromagneten in der Haltebremse eingesetzt, welche für den geöffneten Zustand der Haltebremse mit elektrischer Energie versorgt werden. Die Elektromagneten arbeiten gegen die Federkraft von mechanischen Federn und komprimieren diese. Das Haltebremsmoment, erzeugbar durch die Federkraft, wird auf diese Art von der Welle des Elektromotors zurückgehalten. Erfolgt der Schließbefehl, wird dem Elektromagneten die elektrische Energie entzogen, die mechanischen Federn entspannen sich und die so bereitgestellte Federkraft erzeugt das Haltebremsmoment an der Welle des Elektromotors.

Allerdings könnte die Haltebremse defekt sein, ohne dass sich im rotierenden Betrieb des Elektromotors ein Hinweis dazu ergibt. So ist es möglich, dass die mechanischen Federn während des rotierenden Betriebs des Elektromotors schon defekt sind und dann im Anwendungsfall die Welle des Elektromotors nicht im Stillstand halten können. Um die sichere Funktion der Haltebremse zu überprüfen, wird nach heutigem Vorgehen der Elektromotor bis zum Stillstand gebracht und der Stillstand überwacht. Die Haltebremse wird während oder nach Erreichen des Stillstandes geschlossen. Der Elektromotor baut an seiner Welle ein Moment auf. Ist keine Rotation in Form einer Drehzahl größer Null am Elektromotor festzustellen, wird daraus geschlossen, dass die Bremse funktioniert.

Diese Vorgehensweise kann allerdings nicht für Elektromotoren angewendet werden, welche eine hängende Welle aufweisen. Eine nicht funktionierende Haltebremse könnte den Elektromotor mit hängender Welle zerstören.

Generell besteht also der Nachteil, dass der Elektromotor erst zum Stillstand kommen und der Stillstand überwacht werden muss, bevor die sichere Funktion der Haltebremse überprüft werden kann. Somit ist auch immer zumindest ein Geber am Elektromotor notwendig, welcher die Geschwindigkeit und die Lage des Elektromotors erkennt.

Der Erfindung liegt die Aufgabe zugrunde, ein Bremstestverfahren zur Funktionsüberprüfung einer Haltebremse für einen Elektromotor sowie eine Vorrichtung für das Bremstestverfahren bereitzustellen, welche die Funktionsüberprüfung der Haltebremse nicht vom Stillstand und einer Stillstands-Überwachung des Elektromotors abhängig macht und auf einen Geber zur Geschwindigkeits- und Lageerkennung am Elektromotor aus Sicht des Bremstestverfahrens verzichtet werden kann.

Diese Aufgabe wird durch ein Bremstestverfahren mit den im Anspruch 1 angegebenen Merkmalen gelöst.

Diese Aufgabe wird weiterhin durch eine Steuer- und Regeleinheit nach Anspruch 7, einen elektrischen Umrichter nach Anspruch 10 und ein elektrisches Antriebssystem nach Anspruch 11 gelöst.

Der Erfindung liegt die Erkenntnis zugrunde, dass heutige Verfahren zur Funktionsprüfung einer Haltebremse für einen Elektromotor in einem elektrischen Antriebssystem im Stillstand des Elektromotors durchgeführt werden müssen, um eine verlässliche Aussage über Einsatzbereitschaft und Abnutzungsgrad der Haltebremse zu erhalten. Für eine Reihe von Anwendungen im industriellen Umfeld ist ein derartiges Verfahren eher ungeeignet, da sich einerseits der Elektromotor betriebsbedingt kaum im Stillstand befindet oder andererseits aus technischer Sicht nur dann in diesen versetzt werden kann, wenn eine verlässliche Aussage zur Funktion der Haltebremse vorliegt. Somit wird ein Bremstestverfahren gesucht, welches im rotierenden Betrieb des Elektromotors durchgeführt wird, bevor die Haltebremse im Stillstand ihre eigentliche Haltefunktion am Elektromotor erfüllen kann.

Für die Lösung der Aufgabe wird daher ein Bremstestverfahren zur Funktionsprüfung einer Haltebremse für einen Elektromotor in einem elektrischen Antriebsystem vorgeschlagen, wobei der Elektromotor rotiert, wobei bis zu einem ersten Zeitpunkt an der Haltebremse ein Öffnungssignal ansteht und eine erste Drehzahl des Elektromotors erfasst wird, wobei während einer Zeitdauer ab dem ersten Zeitpunkt bis zu einem zweiten Zeitpunkt an der Haltebremse ein Schließsignal ansteht, welches die Haltebremse zum Erzeugen eines Haltebremsmoments am Elektromotor veranlasst, und eine zweite Drehzahl des Elektromotors erfasst wird, wobei ab dem zweiten Zeitpunkt an der Haltebremse das Öffnungssignal ansteht, welches die Haltebremse zur Zurücknahme des Haltebremsmoments am Elektromotor veranlasst, und wobei zwischen der ersten Drehzahl und der zweite Drehzahl ein erster Vergleich erfolgt, welcher eine erste Information zur Einsatzbereitschaft der Haltebremse bereitstellt.

Besonders vorteilhaft für das vorgeschlagene Bremstestverfahren ist es daher, dass der Elektromotor nicht mehr in einen Stillstand versetzt werden muss. Soweit betriebsbedingte Abläufe eine Änderung der Drehzahl am Elektromotor zulassen, ohne dass diese Änderung der Drehzahl einen unerwünschten Einfluss auf die funktionalen und sicherheitstechnischen Anforderungen der betriebsbedingten Abläufe hat, kann das Bremstestverfahren prinzipiell während jedes rotierenden Betriebszustandes des Elektromotors durchgeführt werden.

Startet das Bremstestverfahren nun vor dem beschriebenen Hintergrund, wird mit der ersten Drehzahl die Drehzahl am Elektromotor erfasst, von der erwartet wird, dass sich diese Drehzahl ohne Reglungseingriffe und ohne Laständerungen am Elektromotor zumindest für eine bekannte Dauer des Bremstestverfahrens nicht verändert. An der Haltebremse liegt das Öffnungssignal an und der Elektromotor ist frei von dem Haltebremsmoment der Haltebremse.

Ist die erste Drehzahl erfasst, wird ab dem ersten Zeitpunkt an die Haltebremse das Schließsignal übermittelt, wonach erwartet wird, dass die Haltebremse ihre Schließfunktion ausführt und am Elektromotor ein Haltebremsmoment anliegt.

Das Schließsignal steht bis zu dem zweiten Zeitpunkt an. Innerhalb der Zeitdauer ab dem ersten Zeitpunkt bis zum zweiten Zeitpunkt wird die zweite Drehzahl erfasst, von der erwartet wird, dass sie sich aufgrund des am Elektromotor wirkenden und von der Haltebremse erzeugten Haltebremsmoments von der ersten Drehzahl unterscheidet. Ab dem zweiten Zeitpunkt wird der Haltebremse das Öffnungssignal übermittelt, welches ihre Öffnungsfunktion aktiviert und das Haltebremsmoment vom Elektromotor zurückziehen soll.

Der Vergleich der ersten Drehzahl mit der zweiten Drehzahl erlaubt nun die erste Information zur Einsatzbereitschaft der Haltebremse, da bei einer Drehzahländerung die Haltebremse zumindest eine Wirkung auf den Elektromotor hat.

Vorteilhafte Ausgestaltungsformen des Verfahrens sind in den abhängigen Ansprüchen angegeben.

Bei einer ersten vorteilhaften Ausgestaltungsform des Bremstestverfahrens bestätigt die erste Information die Einsatzbereitschaft der Haltebremse mittels des ersten Vergleichs, wenn die zweite Drehzahl kleiner ist als die erste Drehzahl.

Ist die zweite Drehzahl kleiner als die erste Drehzahl, konnte von der Haltebremse das Haltebremsmoment am Elektromotor aufbaut werden. Je nachdem, wie viel kleiner die zweite Drehzahl ist, wird beispielsweise anhand eines zu erreichenden Referenzwertes eine Entscheidung getroffen, ob die Haltebremse den Elektromotor bzw. seine Welle bei Bedarf sicher im Stillstand halten kann.

Bei einer weiteren vorteilhaften Ausgestaltungsform des Bremstestverfahrens steht während der Zeitdauer an der Haltebremse ein Haltebremsmomentsignal mit einem Haltebremsmomentwert an, welcher für die Haltebremse aus einem Haltebremsmomentbereich ausgewählt ist, und mittels dem das Haltebremsmoment der Haltbremse für den Elektromotor eingestellt wird.

Zumindest zwei Typen von Haltebremsen stehen für den Einsatz an Elektromotoren zur Verfügung. Während ein erster Typ von Haltebremsen keine variablen Einstellungen des Haltebremsmoments erlaubt, also beim Schließbefehl nur das volle Haltebremsmoment entwickeln kann, ist ein zweiter Typ von Haltebremsen in der Lage, ein einstellbares Haltebremsmoment an den Elektromotor zu legen. Mittels des Haltebremsmomentwerts, welcher als ein Parameter innerhalb des Haltebremsmomentbereichs festlegbar ist, kann das von der Haltbremse am Elektromotor aktivierbare Haltebremsmoment in Grenzen vorgegeben werden.

Diese Möglichkeit einer Dosierung des Haltebremsmoments für den Elektromotor erlaubt es beispielsweise, einen vom Bremstestverfahren hervorgerufenen Verschleiß an der Haltebremse zu reduziert, eine übermäßige Belastung des Elektromotors zu verhindern und somit den betriebsmäßigen Einsatz des Elektromotors nicht zu gefährden.

Das Bremstestverfahren kommt auch für Betriebsbremsen zur Anwendung, deren Hauptfunktion auf ein Abbremsen des rotierenden Elektromotors ausgelegt ist.

Bei einer weiteren vorteilhaften Ausgestaltungsform des Bremstestverfahrens erfolgt ein zweiter Vergleich zwischen der zweiten Drehzahl und einer Vergleichsdrehzahl, welcher eine zweite Information zum Abnutzungsgrad der Haltebremse bereitstellt.

Um die Funktionalität der Haltebremse beispielsweise aus sicherheitstechnischen Erwägungen heraus detaillierter zu prüfen, kann, auch in Abhängigkeit eines vorbestimmten Haltebremsmoments für die Haltebremse, die zweite Drehzahl mit der Vergleichsdrehzahl verglichen werden. Die Vergleichsdrehzahl ist als ein Parameter zu verstehen, welcher in Korrelation zu technischen Eigenschaften der Haltebremse sowie deren Verhalten unter spezifischen Umgebungsbedingungen (Feuchtigkeit, Temperatur) steht. Entspricht die zweite Drehzahl annähernd oder abgestuft der Vergleichsdrehzahl, können detailliertere Aussagen zum Abnutzungsgrad der Haltebremse bereitgestellt werden. Mittels der zweiten Information aus dem zweiten Vergleich ist zumindest abschätzbar, ob bzw. wann die Haltebremse einer Wartung unterzogen werden muss.

Bei einer weiteren vorteilhaften Ausgestaltungsform des Bremstestverfahrens geht während der Zeitdauer ein Drehzahleinbruch einer Drehzahl am Elektromotor von der ersten Drehzahl auf die zweite Drehzahl als eine erwartete Störgröße in eine Drehzahlregelung des Elektromotors ein.

Außerhalb des Bremstestverfahrens würde die Drehzahlreglung des Elektromotors den Drehzahleinbruch der Drehzahl als Störgröße wahrnehmen, welche im Allgemeinen ausgeregelt wird. Da die Drehzahlreglung während des Bremstestverfahrens die Störgröße in ihrer Art und Dimension erwartet, kann deren Auftreten ignoriert oder zumindest so behandelt werden, dass die Ergebnisse des Bremstestverfahrens davon unbeeinflusst sind. Bei einer weiteren vorteilhaften Ausgestaltungsform des Bremstestverfahrens wird das Bremstestverfahren mittels einer Anforderung im rotierenden Betrieb des Elektromotors in Abhängigkeit einer Initialisierungsprüfung gestartet.

Die Anforderung an das Bremstestverfahren kann einerseits aus einer Steuer- und Regeleinheit erfolgen, welche beispielsweise neben der Drehzahlregelung für den Elektromotor auch das Bremstestverfahren durchführt oder von einer überlagerten Reglungseinheit erzeugt und weitergegeben werden. Um sicherzustellen, dass mit Durchführung des Bremstestverfahrens Betriebszustände höherer Priorität des Elektromotors nicht beeinflusst werden oder gefährdet sind, erfolgt die Initialisierungsprüfung entweder vor dem Start des Bremstestverfahrens oder mit dem Start als Bestandteil des Bremstestverfahrens. Ermittelt die Initialisierungsprüfung, dass die Durchführung bzw. die weitere Durchführung des Bremstestverfahrens aktuell hinderlich für die Betriebszustände höherer Priorität ist, erfolgt zumindest ein Abbruch des Bremstestverfahrens, so dass die Haltbremse am Elektromotor kein Haltebremsmoment erzeugen kann.

Für die Lösung der Aufgabe wird ebenfalls eine Steuer- und Regeleinheit zur Durchführung des erfindungsgemäßen Bremstestverfahrens vorgeschlagen, welche ein Vergleichsmittel für den ersten Vergleich und den zweiten Vergleich aufweist, eine Signalaufnahme zur Aufnahme der ersten Drehzahl und der zweiten Drehzahl von der Drehzahlerfassungseinheit aufweist, eine Signalabgabe zur Abgabe des Schließsignals, des Öffnungssignals und eines Haltebremsmomentsignals mit dem Haltebremsmomentwert an die Haltebremse aufweist, sowie ein Prüfungsmittel für die Initialisierungsprüfung und die Drehzahlregelung zur Regelung der Drehzahl des Elektromotors aufweist.

Die für das Bremstestverfahren benötigte erste Drehzahl und die zweite Drehzahl des Elektromotors können von einem am Elektromotor angeordneten Drehzahlgeber als Drehzahlerfassungseinheit erfasst werden, welcher oftmals auch schon für die Drehzahlreglung des Elektromotors vorgesehen ist. Allerdings erlaubt eine zur Ansteuerung von schaltbaren Leistungshalbleitern in elektrischen Umrichtern angewandte feldorientierte Regelung eine Ermittlung bzw. die Erfassung der ersten und zweiten Drehzahl aus anderen gemessenen elektrischen Größen des elektrischen Umrichters wie z.B. Strom und Spannung. Somit kann, bei einer Drehzahlregelung ohne Rückführung der Drehzahl, auf einen Geber für Geschwindigkeits- und Lageerkennung des Elektromotors aus Sicht des Bremstestverfahrens verzichtet werden.

Bei einer ersten vorteilhaften Ausgestaltungsform der Steuerund Regeleinheit weist die Steuer- und Regeleinheit ein Eingabemittel zur Eingabe der Vergleichsdrehzahl und des Haltebremsmomentwerts auf.

Sowohl die Vergleichsdrehzahl wie auch der Haltebremsmomentwert können als Parameter durch das Eingabemittel vom Anwender eingegeben werden. Ein übliches Eingabemittel stellt dabei beispielsweise eine Eingabemaske eines zur Projektierung und oder Parametrierung der Steuer- und Regeleinheit verwendeten Softwaretools dar.

Bei einer weiteren vorteilhaften Ausgestaltungsform der Steuer- und Regeleinheit weist die Steuer- und Regeleinheit ein Ausgabemittel zur Ausgabe der ersten Information und der zweiten Information auf.

Für eine eventuelle Visualisierung oder zur weiteren Verarbeitung der ersten Information über die Einsatzbereitschaft und der zweiten Information über den Abnutzungsgrad der Haltebremse werden diese Informationen dem Anwender durch das Ausgabemittel zur Verfügung gestellt. Ein übliches Ausgabemittel stellt dabei beispielweise eine Ausgabemaske eines zur Projektierung und oder Parametrierung der Steuer- und Regeleinheit verwendeten Softwaretools dar.

Für die Lösung der Aufgabe wird weiterhin ein elektrischer Umrichter zum Betrieb eines Elektromotors mit einer Haltebremse vorgeschlagen, welcher die erfindungsgemäße Steuerund Regeleinheit sowie schaltbare Leistungshalbleiter und eine Treiberschaltungsvorrichtung zur Ansteuerung der schaltbaren Leistungshalbleiter aufweist.

Die erfindungsgemäße Steuer- und Regeleinheit, welche im elektrischen Umrichter angeordnet ist, erfüllt neben der Durchführung des erfindungsgemäßen Bremstestverfahrens auch weitere steuer- und regelungstechnische Funktionen, wie beispielsweise die Erzeugung von Schaltsignalen für die Treiberschaltungsvorrichtung zur Ansteuerung der schaltbaren Leistungshalbleiter des elektrischen Umrichters. Eine Integration von Bremstestverfahren und steuer- und regelungstechnischen Funktionen für den elektrischen Umrichter in diese Steuerund Regeleinheit bietet sich an, da das Bremstestverfahren Abhängigkeiten beispielsweise zu der Drehzahlregelung aufweist, welche üblicherweise in einer Regelungseinheiten des elektrischen Umrichter abläuft.

Für die Lösung der Aufgabe wird weiterhin ein elektrisches Antriebssystem vorgeschlagen, welches den erfindungsgemäßen elektrischen Umrichter aufweist, einen von dem elektrischen Umrichter betriebenen Elektromotor aufweist, eine Haltebremse am Elektromotor aufweist, eine Drehzahlerfassungseinheit zur Erfassung von Drehzahlen des Elektromotors aufweist, eine erste Signalübertragung zur Übermittlung der ersten Drehzahl und der zweiten Drehzahl von der Drehzahlerfassungseinheit zu der Signalaufnahme der Steuer- und Regeleinheit und eine weitere Signalübertragung zur Übermittlung des Schließsignals, des Öffnungssignals und des Haltebremsmomentsignals mit dem Haltebremsmomentwert von der Signalabgabe der Steuer- und Regeleinheit zu der Haltebremse aufweist.

Die Signalübertragung zur Übermittlung der ersten Drehzahl und der zweiten Drehzahl von der Drehzahlerfassungseinheit zu der Signalaufnahme der Steuer- und Regeleinheit kann dabei auf einer Datenübertragung mittels einer Softwarelösung beschränkt bleiben, wenn die erste Drehzahl und die zweite Drehzahl via feldorientierter Regelung ermittelbar und für das Bremstestverfahren ohne einen Drehzahlgeber am Elektromotor erfassbar sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Es zeigt:
- FIG 1: ein Struktogramm des erfindungsgemäßen Bremstestverfahrens zur Funktionsprüfung einer Haltebremse für einen Elektromotor,
- FIG 2: zwei zusammengehörende Diagramme zur Visualisierung eines zeitlichen Ablaufs des erfindungsgemäßen Bremstestverfahrens nach der FIG 1, und
- FIG 3: eine schematische Darstellung eines elektrischen Antriebssystems mit einem Elektromotor, einer Haltebremse, einem elektrischen Umrichter und einer Steuer- und Regeleinheit zur Durchführung des erfindungsgemäßen Bremstestverfahrens nach der FIG 1 und der FIG 2.

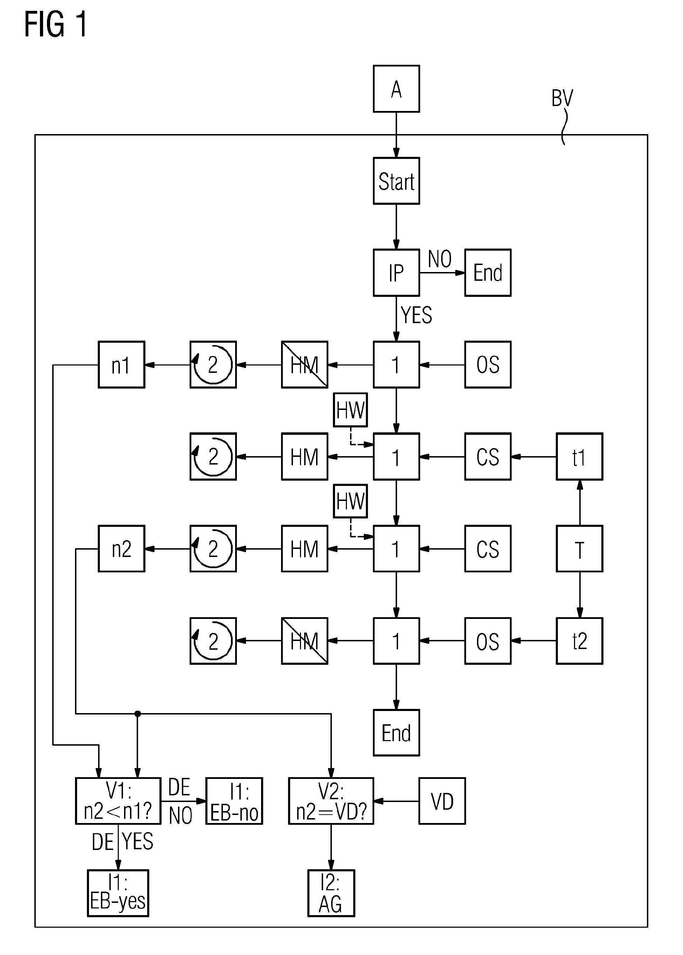

Das Struktogramm in der FIG 1 zeigt das erfindungsgemäße Bremstestverfahren BV, mittels dem eine Funktionsprüfung einer Haltebremse 1 für einen Elektromotor 2 insbesondere im industriellen Umfeld Anwendung findet.

Im Gegensatz zu bekannten Verfahren, welche Bremsen mit einer Haltefunktion bzgl. ihrer Verfügbarkeit und Funktionalität im Stillstand des Elektromotors 2 testen, wird das erfindungsgemäße Bremstestverfahren BV an der Haltebremse 1 durchgeführt, während der Elektromotor 2 rotiert. Da das Bremstestverfahren BV prinzipiell zu jedem Betriebszeitpunkt durchgeführt werden kann, solang der Elektromotor 2 rotiert, besteht dennoch oft eine Notwendigkeit, vor bzw. unmittelbar nach einem Start des Bremstestverfahrens BV zu prüfen, ob Betriebszustände höherer Priorität für den Elektromotor 2 durch das Bremstestverfahren BV nicht beeinflusst oder gefährdet werden können.

Somit wird nach einer Anforderung A an das Bremstestverfahren BV eine Initialisierungsprüfung IP angestoßen. Die Anforderung A kann dabei sowohl von einer Steuer- und Regeleinheit stammen, welche auch das Bremstestverfahren BV ausführt, aber auch von komplexeren, oft übergeordneten Steuer- und Regelungsebenen angestoßen werden.

Im Ergebnis dieser Initialisierungsprüfung IP wird eine Aussage getroffen, ob das nun gestartete Bremstestverfahren BV, aus prozesstechnischer wie auch aus sicherheitstechnischer Sicht weiter durchführbar ist. Die Kriterien sind im Allgemeinen abhängig vom Einsatz des Elektromotors 2, an dem die Haltebremse 1 und somit das Bremstestverfahren BV zur Anwendung kommen soll.

Ergibt die Initialisierungsprüfung IP, dass das Bremstestverfahren BV derzeit nicht weitergeführt werden kann, wird es beendet und kann zu einem späteren Zeitpunkt neu gestartet werden. Erst eine Wiederholung der Anforderung A startet dann das Bremstestverfahren BV neu. Möglich ist aber auch, das Bremstestverfahren BV nicht zu beenden und die Initialisierungsprüfung IP solang zyklisch durchzuführen, bis das Bremstestverfahrens BV weitergeführt und mit entsprechenden Ergebnissen beendet werden kann.

Ergibt die Initialisierungsprüfung IP, dass das Bremstestverfahren BV weitergeführt werden kann, wird eine erste Drehzahl n1 des Elektromotors 2 erfasst, wobei an der Haltebremse 1 ein Öffnungssignal OS ansteht, welches die Haltebremse 1 veranlasst, ihr Haltebremsmoment HM vom Elektromotor 2 zurückzuhalten. Das Öffnungssignal OS steht bis zu einem ersten Zeitpunkt t1 an der Haltebremse 1 an.

Ab dem ersten Zeitpunkt t1 bis zu einem zweiten Zeitpunkt t2, also während einer Zeitdauer T, steht an der Haltebremse 1 ein Schließsignal CS an, welches die Haltebremse 1 zum Erzeugen eines Haltebremsmoments HM am Elektromotor 2 veranlasst. Während der Zeitdauer T wird eine zweite Drehzahl n2 am Elektromotor 2 erfasst. Damit das Haltebremsmoment HM am Elektromotor 2 wirksam werden kann, ist es sinnvoll, die zweite Drehzahl n2 eher zum Ende der Zeitdauer T zu erfassen.

Ist die Haltebremse 1 technisch in der Lage, ein innerhalb eines Haltebremsmomentbereichs variables Haltebremsmoment HM an den Elektromotor 2 abzugeben, kann das Haltebremsmoment HM mittels eines Haltebremsmomentwerts HW vorgewählt werden.

Sind die erste Drehzahl n1 und zweite Drehzahl n2 erfasst, erfolgt ein erster Vergleich V1, welcher eine erste Information I1 zur Einsatzbereitschaft EB der Haltebremse 1 bereitstellt. Die Einsatzbereitschaft EB der Haltebremse 1 bestätigt sich, wenn die zweite Drehzahl n2 kleiner ist als die erste Drehzahl n1. Praxisnah bedeutet dies, dass ein signifikanter Drehzahleinbruch DE am Elektromotor 2, je nach Leistungsklasse des Elektromotors 2 und der Haltebremse 1, auftreten sollte.

Die erste Information I1 steht nun zur weiteren Informationsverarbeitung bereit. Auch geht der Drehzahleinbruch DE als eine erwartete Störgröße in eine Drehzahlregelung des Elektromotors 2 ein (in FIG 1 nicht gezeigt), da während der Zeitdauer T des Bremstestverfahrens BV eine Ausregelung des Drehzahleinbruchs DE durch die Drehzahlreglung für den Elektromotor 2 vermieden werden muss.

Ebenfalls nach Erfassung der beiden Drehzahlen n1, n2 erfolgt ein zweiter Vergleich V2 zwischen der zweiten Drehzahl n2 und einer Vergleichsdrehzahl VD, welcher eine zweite Information 12 zum Abnutzungsgrad AG der Haltebremse 1 bereitstellt. Die Vergleichsdrehzahl VD kann wie auch der Haltebremsmomentwert HW parametriert und somit vorgegeben werden. Wird am Elektromotor 2 das Haltebremsmoment HM wirksam, welches mittels des Haltebremsmomentwertes vorgewählt wurde, entspricht die zweite Drehzahl n2 bei voll funktionsfähiger Haltebremse 1 der Vergleichsdrehzahl VD zumindest annähernd. Der Abnutzungsgrad AG wird eher sehr klein oder nicht vorhanden sein. Unterliegt die Haltebremse 1 hingegen schon einem Verschleiß, wird die erfasste zweite Drehzahl n2 in Abstufungen Unterschiede zur Vergleichsdrehzahl VD aufweisen. Der Abnutzungsgrad AG steht mittels der zweiten Information 12 zur weiteren Informationsverarbeitung breit.

Ab der zweiten Zeitpunkt t2 steht an der Haltebremse 1 wieder das Öffnungssignal OS an, welches die Haltebremse 1 zur Zurücknahme des Haltebremsmoments HM am Elektromotor 2 veranlasst. Sind die erste Information I1 zur Einsatzbereitschaft EB und die zweite Information 12 zum Abnutzungsgrad AG des Elektromotors 2 entsprechend ermittelt und ggf. zur weiteren Informationsverarbeitung übermittelt worden, endet das Bremstestverfahren BV.

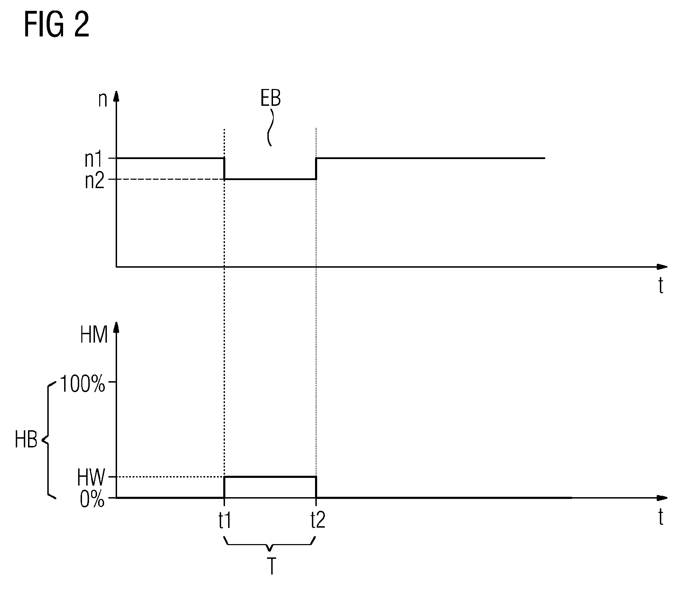

Mit der FIG 2 werden zwei zusammengehörende Diagramme dargestellt, welche einen zeitlichen Ablauf des Bremstestverfahrens BV nach der FIG 1 aufzeigen.

Wie schon beschrieben, rotiert der Elektromotor mit der ersten Drehzahl n1 bis zum ersten Zeitpunkt t1 einer Zeit t, wobei die erste Drehzahl n1 bis zum ersten Zeitpunkt t1 auch erfasst wird. Die Erfassung der ersten Drehzahl n1 sollte, verfahrenstechnisch sinnvoll, kurz vor Erreichen des ersten Zeitpunkts t1 geschehen. Bis zu diesem ersten Zeitpunkt t1 wird von der Haltebremse kein Haltebremsmoment HM an den Elektromotor abgegeben.

Während der Zeitdauer T, also ab dem ersten Zeitpunkt t1 bis zu dem zweiten Zeitpunkt t2 der Zeit t, wird mittels eines Haltebremsmomentwertes HW ein Haltebremsmoment HM von der Haltebremse an den Elektromotor abgegeben. Liegt das Haltebremsmoment HM am Elektromotor an, sinkt die zweite Drehzahl n2 auf einen kleineren Wert als die erste Drehzahl n1. Es stellt sich am Elektromotor ein Drehzahleinbruch DE seiner Drehzahl n ein. Wird das Haltebremsmoment HM ab dem zweiten Zeitpunkt t2 wieder zurückgenommen, kann die Drehzahl n am Elektromotor wieder auf die erste Drehzahl n1 ansteigen, soweit dies prozesstechnisch für den Elektromotor vorgegeben wird.

Der Haltebremsmomentwert HW kann innerhalb eines Haltebremsmomentbereichs HW ausgewählt werden, soweit das Haltebremsmoment HM für die Haltebremse variabel eingestellt werden kann. Damit der Verschleiß der Haltebremse, aber ggf. auch des Elektromotors, durch das Bremstestverfahren BV möglichst gering gehalten wird, ist ein Haltebremsmomentwert HW zu wählen, welcher für die Haltebremse das Haltebremsmoment HM zwischen 3% bis 10% eines maximal erreichbaren Haltebremsmoments HM von 100% der Haltebremse einstellt.

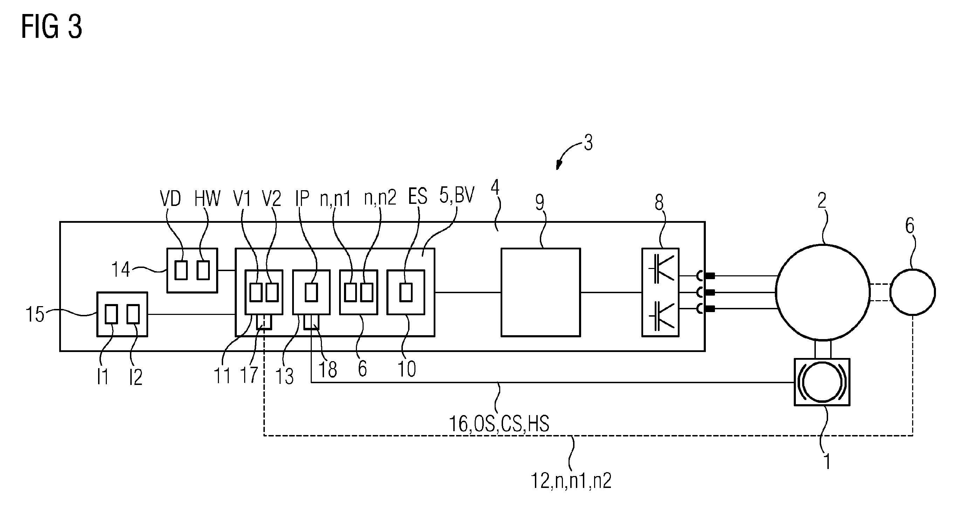

Die FIG 3 zeigt eine schematische Darstellung eines elektrischen Antriebssystems 3 mit einem Elektromotor 2, einer Haltebremse 1, einem elektrischen Umrichter 4 und einer Steuerund Regeleinheit 5 zur Durchführung des erfindungsgemäßen Bremstestverfahrens BV nach der FIG 1 und der FIG 2.

Die Steuer- und Regeleinheit 5, welche das Bremstestverfahren BV durchführt, weist dabei ein Vergleichsmittel 11 zur Ausführung des ersten Vergleichs V1 und des zweiten Vergleichs V2 sowie ein Prüfungsmittel 13 zur Ausführung der Initialisierungsprüfung IP auf. In eine Drehzahlregelung 10 der Steuer- und Regeleinheit 5 geht als erwartete Störgröße ES der Drehzahleinbruch DE ein.

Werden die erste Drehzahl n1 und die zweite Drehzahl n2 des Elektromotors 2 mittels einer Drehzahlerfassungseinheit 6 beispielsweise aus Drehzahlwerten einer feldorientierter Regelung erfasst, ist die Drehzahlerfassungseinheit 6 Bestandteil der Steuer- und Regeleinheit 5. Werden hingegen die erste Drehzahl n1 und die zweite Drehzahl n2 des Elektromotors 2 mittels der Drehzahlerfassungseinheit 6 direkt am Elektromotor 2 erfasst, übermittelt eine erste Signalübertragung 12 die erste Drehzahl n1 und die zweite Drehzahl n2 an eine Signalaufnahme 17 der Steuer- und Regeleinheit 5.

Das Öffnungssignal OS, das Schließsignal CS und das Haltebremsmomentsignal HS mit dem Haltebremsmomentwert werden mittels einer weiteren Signalübertragung 16 von einer Signalabgabe 18 der Steuer- und Regeleinheit 5 an die Haltebremse 1 übermittelt.

Ein Ausgabemittel 15 im elektrischen Umrichter 4 ermöglicht eine Ausgabe sowie eine weitere Informationsverarbeitung der im Bremstestverfahren BV der Steuer- und Regeleinheit 5 ermittelten ersten Information I1 und der zweiten Information I2.

Ein Eingabemittel 14 im elektrischen Umrichter 4 ermöglicht eine Eingabe der für das im Bremstestverfahren BV der Steuer- und Regeleinheit 5 benötigten Vergleichsdrehzahl VD und des Haltebremsmomentwertes HW.

Neben der Durchführung des Bremstestverfahrens BV erzeugt die Steuer- und Regeleinheit 5 im elektrischen Umrichter 4 auch Schaltsignale für eine Treiberschaltungsvorrichtung 9, welche zur Ansteuerung von schaltbaren Leistungshalbleiter 8 vorgesehen ist. Mittels derart schaltbarer Leistungshalbleiter 8 in beispielsweise Leistungshalbleitermodulen erfolgt eine nach Drehzahl und Drehmoment geregelte Energieversorgung für den Betrieb des Elektromotors 2 im elektrischen Antriebssystem 3. Diese Aufgabe könnte auch eine separate Regelungseinheit übernehmen. Jedoch ist ein Zusammenfassen von Steuer- und Regelungsfunktionen im elektrischen Umrichter 4 effizienter und dies sowohl aus technisch wie auch wirtschaftlich Sicht.

## Patentansprüche

1. Bremstestverfahren (BV) zur Funktionsprüfung einer Haltebremse (1) für einen Elektromotor (2) in einem elektrischen Antriebsystem (3), wobei
- der Elektromotor (2) rotiert,
- bis zu einem ersten Zeitpunkt (t1) an der Haltebremse (1) ein Öffnungssignal (OS) ansteht und eine erste Drehzahl (n1) des Elektromotors (2) erfasst wird,
- während einer Zeitdauer (T) ab dem ersten Zeitpunkt (t1) bis zu einem zweiten Zeitpunkt (t2) an der Haltebremse (1) ein Schließsignal (CS) ansteht, welches die Haltebremse (1) zum Erzeugen eines Haltebremsmoments (HM) am Elektromotor (2) veranlasst, und eine zweite Drehzahl (n2) des Elektromotors (2) erfasst wird,
- ab dem zweiten Zeitpunkt (t2) an der Haltebremse (1) das Öffnungssignal (OS) ansteht, welches die Haltebremse (1) zur Zurücknahme des Haltebremsmoments (HM) am Elektromotor (2) veranlasst, und
- zwischen der ersten Drehzahl (n1) und der zweite Drehzahl (n2) ein erster Vergleich (V1) erfolgt, welcher eine erste Information (I1) zur Einsatzbereitschaft (EB) der Haltebremse (1) bereitstellt.

2. Bremstestverfahren (BV) nach Anspruch 1,
wobei die erste Information (I1) die Einsatzbereitschaft (EB) der Haltebremse (1) mittels des ersten Vergleichs (V1) bestätigt, wenn die zweite Drehzahl (n2) kleiner ist als die erste Drehzahl (n1).

3. Bremstestverfahren (BV) nach einem der Ansprüche 1 oder 2,
wobei während der Zeitdauer (T) an der Haltebremse (1) ein Haltebremsmomentsignal (HS) mit einem Haltebremsmomentwert (HW) ansteht, welcher für die Haltebremse (1) aus einem Haltebremsmomentbereich (HB) ausgewählt ist, und mittels dem das Haltebremsmoment (HM) der Haltbremse (1) für den Elektromotor (2) eingestellt wird.

4. Bremstestverfahren (BV) nach einem der vorhergehenden Ansprüche,
wobei ein zweiter Vergleich (V2) zwischen der zweiten Drehzahl (n2) und einer Vergleichsdrehzahl (VD) erfolgt, welcher eine zweite Information (12) zum Abnutzungsgrad (AG) der Haltebremse (1) bereitstellt.

5. Bremstestverfahren (BV) nach einem der vorhergehenden Ansprüche,
wobei während der Zeitdauer (T) ein Drehzahleinbruch (DE) am Elektromotor (2) von der ersten Drehzahl (n1) auf die zweite Drehzahl (n2) als eine erwartete Störgröße (ES) in eine Drehzahlregelung (10) des Elektromotors (2) eingeht.

6. Bremstestverfahren (BV) nach einem der vorhergehenden Ansprüche,
wobei das Bremstestverfahren (BV) mittels einer Anforderung (A) im rotierenden Betrieb des Elektromotors (2) in Abhängigkeit einer Initialisierungsprüfung (IP) gestartet wird.

7. Steuer- und Regeleinheit (5) zur Durchführung eines Bremstestverfahrens (BV) nach einem der Ansprüche 1 bis 6, aufweisend
- ein Vergleichsmittel (11) für den ersten Vergleich (V1) und den zweiten Vergleich (V2),
- eine Signalaufnahme (17) zur Aufnahme der ersten Drehzahl (n1) und der zweiten Drehzahl (n2) des Elektromotors (2) von einer Drehzahlerfassungseinheit (6),
- eine Signalabgabe (18) zur Abgabe des Schließsignals (CS), des Öffnungssignals (OS) und eines Haltebremsmomentsignals (HS) mit dem Haltebremsmomentwert (HW) an die Haltebremse (1),
- ein Prüfungsmittel (13) für die Initialisierungsprüfung (IP), und
- die Drehzahlregelung (10) zur Regelung der Drehzahl (n) des Elektromotors (2).

8. Steuer- und Regeleinheit (5) nach Anspruch 7,
wobei die Steuer- und Regeleinheit (5) ein Eingabemittel (14) zur Eingabe der Vergleichsdrehzahl (VD) und des Haltebremsmomentwerts (HW) aufweist.

9. Steuer- und Regeleinheit (5) nach einem der Ansprüche 7 oder 8,
wobei die Steuer- und Regeleinheit (5) ein Ausgabemittel (15) zur Ausgabe der ersten Information (I1) und der zweiten Information (12) aufweist.

10. Elektrischer Umrichter (4) zum Betrieb eines Elektromotors (2) mit einer Haltebremse (2), aufweisend
- eine Steuer- und Regeleinheit (5) nach einem der Ansprüche 7 bis 9,
- schaltbare Leistungshalbleiter (8) und
- eine Treiberschaltungsvorrichtung (9) zur Ansteuerung der schaltbaren Leistungshalbleiter (8).

11. Elektrisches Antriebssystem (3), aufweisend
- einen elektrischen Umrichter (4) nach Anspruch 10,
- einen von dem elektrischen Umrichter (4) betriebenen Elektromotor (2),
- eine Haltebremse (1) am Elektromotor (2),
- eine Drehzahlerfassungseinheit (6) zur Erfassung von Drehzahlen (n, n1, n2) des Elektromotors (2),
- eine erste Signalübertragung (12) zur Übermittlung der ersten Drehzahl (n1) und der zweiten Drehzahl (n2) von der Drehzahlerfassungseinheit (6) zu der Signalaufnahme (17) der Steuer- und Regeleinheit (5), und
- eine weitere Signalübertragung (16) zur Übermittlung des Schließsignals (CS), des Öffnungssignals (OS) und des Haltebremsmomentsignals (HS) mit dem Haltebremsmomentwert (HW) von der Signalabgabe (18) der Steuer- und Regeleinheit (5) zu der Haltebremse (1).
